# EUROPEAN PATENT APPLICATION

(11) **EP 2 555 106 A2**
(43) Date of publication of application: **06.02.2013**
(21) Application number: 12151616.5
(22) Date of filing: 18.01.2012
(51) Int. Cl.: G06F 3/06

(54) **Method and apparatus of sanitizing storage device**

(30) Priority: 05.08.2011 US 201113204558
(71) Applicant: Hitachi, Ltd., Chiyoda-ku Tokyo 100-8280 (JP)
(72) Inventor: Kawamura, Shunji, Tokyo 100-8220 (JP)
(74) Representative: MERH-IP Matias Erny Reichl Hoffmann

(57) **Abstract**

Systems and methods directed to erasing data and/or the sanitization of storage systems. In storage systems that utilize storage devices such as Flash Memory Devices 132 or Hard Disk Drives (HDDs) 131, systems and methods utilize the initializing function of the storage device to erase the data. Storage devices 131, 132 within the storage systems may have an initializing function that erases all blocks of the storage device. Systems and methods further check for the initializing function and the media type to determine if the initializing function is available to determine the optimal sanitizing process for the device.

## Description

### BACKGROUND OF THE INVENTION

### Field of the Invention

This invention is generally directed to data storage systems, and more specifically, to systems and methods directed to the sanitization of data.

### Description of the Related Art

In conventional storage systems, such as storage systems utilizing Hard Disk Drives (HDD), it is difficult to completely erase data stored in the storage media, even if the storage media is formatted and the data files are deleted. For example, the formatted data may still be recoverable from leftover magnetic domains if the storage media is an HDD. The formatting function of the file system may also merely eliminate file metadata and not actually erase the file data of the storage media.

To reduce the possibility of data recovery for erased data, sanitizing processes are utilized to overwrite the storage media. An example of such a sanitizing process is known as shredding. During a shredding process for HDD, the HDD is overwritten several times with different data (e.g. redundant overwrite with "00"-"FF"-"00").

Storage systems may also contain several types of storage media, such as SAS (Serial Attached) HDD, SATA (Serial ATA) HDD and SSD (Solid State Disk) including flash memory devices. While flash memory devices can be erased by blocks, storage media using magnetic disks may have to be overwritten several times in order to conduct proper sanitization.

However, there are several problems in overwriting the storage media several times over. For example, NAND Flash memory devices oftentimes contain spare storage areas that are difficult to erase by an overwriting process. The NAND flash memory device sets all bits in the block to "1" by removing electrons. One memory page may contain 2KB of user data area along with some redundant memory areas. One block may contain 64 memory pages. For HDD devices, it takes a long time to conduct each overwrite.

### SUMMARY OF THE INVENTION

The invention is directed to methods and systems that substantially obviate one or more of the above and other problems associated with conventional techniques for storage systems, particularly the proper sanitization and/or formatting of storage media in a storage system.

Aspects of the present invention may include a storage system a plurality of storage devices and a storage controller receiving commands from a host computer coupled to the storage system and controlling the plurality of storage devices. In response to receiving a command to sanitize, the storage controller determines whether any ones of the plurality of storage devices that are subject to the command contain an initializing function, and invokes the initializing function of the any ones of the plurality of storage devices having the initializing function.

Aspects of the present invention may further include a storage controller for a storage system with a plurality of storage devices, the storage controller receiving commands from a host computer coupled to the storage system and controlling the plurality of storage devices, the storage system executing a process wherein in response to receiving a command to sanitize, determining whether any ones of the plurality of storage devices that are subject to the command contain an initializing function, and invoking the initializing function of the any ones of the plurality of storage devices having the initializing function.

Aspects of the present invention may further include a method of sanitizing a storage system with a storage controller and a plurality of storage devices. In response to receiving a command to sanitize, the method may have the storage controller execute a process for determining whether any ones of the plurality of storage devices that are subject to the command contain an initializing function; and invoking the initializing function of the any ones of the plurality of storage devices having the initializing function.

According to an aspect of the invention, there is proposed a storage system, comprising a plurality of storage devices; and a storage controller receiving commands from a host computer coupled to the storage system and controlling the plurality of storage devices; wherein in response to receiving a command to sanitize, the storage controller determines whether any ones of the plurality of storage devices that are subject to the command contain an initializing function, and invokes the initializing function of the any ones of the plurality of storage devices having the initializing function.

Preferably, the plurality of storage devices are grouped into a plurality of RAID groups, and/or if the command to sanitize is against at least one of the RAID groups, the storage controller preferably determines for each of the at least one of the RAID groups subject to the command whether the storage device of the at least one of the RAID groups has the initializing function in determining whether any of the plurality of storage devices subject to the command has a initializing function.

Preferably, the plurality of storage devices comprises hard disk drives and flash memory devices; the storage controller preferably identifies a type of storage media for each of the storage devices in response to receiving the command to sanitize, and/or if the type is identified as a hard disk drive (HDD) and if the HDD does not have an initializing function, the storage controller preferably sanitizes the HDD by using a write pattern.

If the command to sanitize is a hard disk drive (HDD) shredding command with a write pattern, the storage controller preferably converts the command to invoke the initializing function if the any ones of the plurality of storage devices subject to the command has the initializing function.

Preferably, the any ones of the plurality of storage devices subject to the command comprises at least one flash memory device, and/or the storage controller preferably determines if a last pattern is equivalent to an initialize data pattern of the initialization function, and if the last pattern is not equivalent to the initialize data pattern, preferably uses the write pattern to write set data to the at least one flash memory device.

Preferably, the storage controller provides the plurality of storage devices to the host computer as a plurality of logical volumes, and preferably checks whether there is an online logical volume included in the each of the at least one of the RAID groups subject to the command to sanitize; and/or if the online logical volume exists, the storage controller preferably migrates the online logical volume.

If the any ones of the plurality of storage devices subj ect to the command to sanitize is a HDD containing the initializing function, the storage controller preferably determines whether a last pattern is equivalent to an initialize data pattern of the initialization function, and/or if the last pattern is not equivalent to the initialize data pattern, preferably uses the write pattern to write set data to the hard disk drive.

Preferably, the plurality of storage devices are grouped into RAID groups, each of the RAID groups preferably comprising at least one of the plurality of storage devices; the command to sanitize is preferably against all of the plurality of storage devices; and/or the storage controller preferably determines for each of the RAID groups whether the at least one of the plurality of storage devices in the each of the RAID groups contains the initializing function or not, and/or preferably performs the sanitization by RAID groups.

According to another aspect of the invention, there is proposed a storage controller for a storage system with a plurality of storage devices, the storage controller receiving commands from a host computer coupled to the storage system and controlling the plurality of storage devices, the storage system executing a process comprising: in response to receiving a command to sanitize, determining whether any ones of the plurality of storage devices that are subject to the command contain an initializing function, and invoking the initializing function of the any ones of the plurality of storage devices having the initializing function.

Preferably, the plurality of storage devices are grouped into a plurality of RAID groups, and/or if the command to sanitize is against at least one of the RAID groups, the determining whether any of the plurality of storage devices subject to the command has a initializing function preferably further comprises determining for each of the at least one of the RAID groups subject to the command whether the storage device of the at least one of the RAID groups has the initializing function.

Preferably, the process further comprises identifying a type of storage media for each of the storage devices in response to receiving the command to sanitize, and if the type is identified as a hard disk drive (HDD) and if the HDD does not have an initializing function, the process preferably further comprises sanitizing the HDD by using a write pattern; wherein the plurality of storage devices preferably comprises hard disk drives and flash memory devices.

If the command to sanitize is a hard disk drive (HDD) shredding command with a write pattern, the process preferably further comprises converting the command to invoke the initializing function if the any ones of the plurality of storage devices subject to the command has the initializing function.

Preferably, the any ones of the plurality of storage devices subject to the command comprises at least one flash memory device, wherein the process further preferably comprises determining if a last pattern is equivalent to an initialize data pattern of the initialization function, and if the last pattern is not equivalent to the initialize data pattern, the process preferably further comprises using the write pattern to write set data to the at least one flash memory device.

Preferably, the storage controller provides the plurality of storage devices to the host computer as a plurality of logical volumes, and preferably checks whether there is an online logical volume included in the each of the at least one of the RAID groups subject to the command to sanitize; and/or wherein if the online logical volume exists, the storage controller preferably migrates the online logical volume.

If the any ones of the plurality of storage devices subj ect to the command to sanitize is a HDD containing the initializing function, the storage controller preferably determines whether a last pattern is equivalent to an initialize data pattern of the initialization function, and if the last pattern is not equivalent to the initialize data pattern, preferably uses the write pattern to write set data to the hard disk drive.

The plurality of storage devices are preferably grouped into RAID groups, each of the RAID groups preferably comprising at least one of the plurality of storage devices; wherein the command to sanitize is preferably against all of the plurality of storage devices; and wherein the process preferably further comprises determining for each of the RAID groups whether the at least one of the plurality of storage devices in the each of the RAID groups contains the initializing function or not, and the process preferably further comprises performing the sanitization by RAID groups.

According to another aspect of the invention, there is proposed a method of sanitizing a storage system with a storage controller and a plurality of storage devices, comprising in response to receiving a command to sanitize, having the storage controller determine whether any ones of the plurality of storage devices that are subject to the command contain an initializing function; and invoke the initializing function of the any ones of the plurality of storage devices having the initializing function.

Preferably, the plurality of storage devices are grouped into a plurality of RAID groups, and wherein if the command to sanitize is against at least one of the RAID groups, the determining whether any of the plurality of storage devices subject to the command has a initializing function preferably further comprises determining for each of the at least one of the RAID groups subject to the command whether the storage device of the at least one of the RAID groups has the initializing function.

The method preferably further comprises having the storage controller identify a type of storage media for each of the storage devices in response to receiving the command to sanitize; and/or wherein if the type is a hard disk drive and if the HDD does not have an initializing function, having the storage controller sanitize the HDD by using a write pattern; wherein the plurality of storage devices preferably comprises hard disk drives and flash memory devices.

If the command to sanitize is a HDD shredding command with a write pattern, the method preferably further comprises having the storage controller convert the command to invoke the initializing function if the any ones of the plurality of storage devices subject to the command has the initializing function.

The method preferably further comprises having the storage controller determine if a last pattern is equivalent to an initialize data pattern of the initialization function, wherein the any ones of the plurality of storage devices subject to the command preferably comprises at least one flash memory device, and/or wherein if the last pattern is not equivalent to the initialize data pattern, the method preferably further comprises using the write pattern to write set data to the at least one flash memory device.

The method preferably further comprises having the storage controller provide the plurality of storage devices to a host computer as a plurality of logical volumes, and/or checking whether there is an online logical volume included in the each of the at least one of the RAID groups subject to the command to sanitize; wherein if the online logical volume exists, the method preferably further comprises migrating the online logical volume.

The method preferably further comprises if the any ones of the plurality of storage devices subject to the command to sanitize is a HDD containing the initializing function, having the storage controller determine whether a last pattern is equivalent to an initialize data pattern of the initialization function, and/or if the last pattern is not equivalent to the initialize data pattern, using the write pattern to write set data to the hard disk drive.

Preferably, the plurality of storage devices are grouped into RAID groups, each of the RAID groups preferably comprising at least one of the plurality of storage devices; wherein the command to sanitize is preferably against all of the plurality of storage devices in the storage system; and/or wherein the storage controller preferably determines for each of the RAID groups whether the at least one of the plurality of storage devices in the each of the RAID groups contains the initializing function or not, and preferably performs the sanitization by RAID groups.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

It is to be understood that both the foregoing and the following descriptions are exemplary and explanatory only and are not intended to limit the claimed invention or application thereof in any manner whatsoever.

### BRIEF DESCRIPTION OF THE DRAWINGS

The accompanying drawings, which are incorporated in and constitute a part of this specification exemplify the embodiments of the present invention and, together with the description, serve to explain and illustrate principles of the inventive technique. Specifically:

Figure 1 illustrates an exemplary physical system configuration according to embodiments of the invention.

Figure 2 illustrates an exemplary flash memory device configuration according to embodiments of the invention.

Figure 3 illustrates an exemplary memory structure according to embodiments of the invention.

Figure 4 illustrates an exemplary structure of a RAID group information table according to embodiments of the invention.

Figure 5 illustrates an exemplary disk information table according to embodiments of the invention.

Figure 6 illustrates an exemplary disk model information table according to embodiments of the invention.

Figure 7 illustrates an exemplary logical volume information table according to embodiments of the invention.

Figure 8 illustrates an exemplary sanitizing pattern information table according to embodiments of the invention.

Figure 9 illustrates an exemplary flowchart of a sanitizing process according to embodiments of the invention.

Figure 10 illustrates an exemplary flowchart of a sanitizing process for a flash memory (FM) device according to embodiments of the invention.

Figure 11 illustrates an exemplary flowchart of a sanitizing process for a Hard Disk Drive (HDD) according to embodiments of the invention.

Figure 12 illustrates an exemplary flowchart of a formatting process according to embodiments of the invention.

Figure 13 illustrates an exemplary flowchart of a formatting process for a FM device according to embodiments of the invention.

Figure 14 illustrates an exemplary flowchart of a formatting process for a HDD according to embodiments of the invention.

Figure 15 illustrates an exemplary HDD configuration according to embodiments of the invention.

### DETAILED DESCRIPTION OF THE INVENTION

In the following detailed description, reference will be made to the accompanying drawings, in which identical functional elements are designated with like numerals. The aforementioned accompanying drawings show by way of illustration, and not by way of limitation, specific embodiments and implementations consistent with principles of the present invention. These implementations are described in sufficient detail to enable those skilled in the art to practice the invention and it is to be understood that other implementations may be utilized and that structural changes and/or substitutions of various elements may be made without departing from the scope and spirit of present invention. The following detailed description is, therefore, not to be construed in a limited sense. Additionally, the various embodiments of the invention as described may be implemented in the form of a software running on a general purpose computer, in the form of a specialized hardware, or combination of software and hardware.

Flash memory (FM) devices may have an initializing function that erases all blocks within the FM device. Storage systems may involve a mix of such flash memory devices and HDDs. Thus, in accordance to basic embodiments of the invention, when the storage system is instructed to shred its media, the storage system determines the instructed media. If the instructed media are HDDs, the storage system may simply overwrite them. However, if they are FM devices, the storage system sends an initializing command to the FM device to invoke its initialization function.

HDDs may also contain a similar initializing function. In accordance with other basic embodiments of the invention, the storage system checks not only the media type but the existence of an initializing function, selects and conducts the optimized sanitizing process for the device.

First Embodiment: Sanitizing a Redundant Array of Inexpensive Disks (RAID)

A command is issued from a host computer to sanitize or shred a storage system with a RAID group. The command may be directed to the storage system or to a particular RAID group within the storage system. Upon receiving a command to sanitize the RAID group, the storage controller checks each type of storage media in the RAID group, and instead of sanitizing by conducting repeated overwrites, the storage controller can utilize the initializing function of the storage media to conduct the sanitizing if such an initializing function is available. The storage controller can achieve the sanitizing by converting the command to sanitize into a command to invoke the initializing function of the storage media, and sending the initializing command to the storage media.

Basic System Configuration

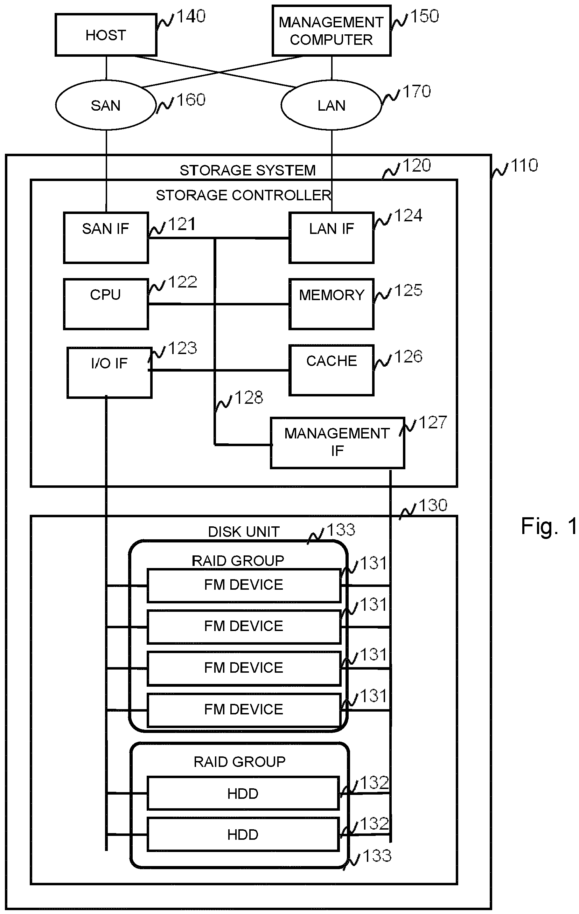

Figure 1 illustrates an exemplary physical system configuration according to embodiments of the invention. Various possible components of the physical system, according to embodiments of the invention, are indicated as follows. The system may include a storage system 110 which stores data and which may also include a storage controller 120 and a disk unit 130. The storage controller 120 of the storage system 110 may facilitate interactions between the storage system 110 and either the host 140 or the management computer 150. A storage area network interface 121 connects with a host computer 140 and a management computer 150 via a storage area network 160. Additionally, a local area network interface 124 may also be provided to connect with the host computer 140 and the management computer 150 via a local area network 170. The storage system may also use a CPU 122 which handles operations for the storage system 110, including reading programs, tables from memory 125, or writing tables to memory 125 and executing the programs read from the memory 125. The memory can additionally be operable to store programs and tables of the storage system 110. A cache 126 can also be provided to store cached data for the storage system 110. There may also be an I/O Interface 123 and a management interface 127: The I/O interface 123 connects with disks 131, 132 and transfers read/write commands and data to/from disks 131,132. The management interface 123 connects with disks 131, 132, transfers initializing/mass writing commands to disks 131, 132 and may be combined with I/O disk interface 123. To connect the various components within the storage controller 120, an internal network 128 can be provided as needed. Disk unit 130 stores the disks/storage media, including multiple types of media, such as Flash memory devices 131 and HDDs 132. The disk unit are grouped by RAID groups configured depending on the RAID level. The RAID groups are formed using the same type of storage media. Various possible storage media are possible within the system. One possible storage media for storing data in the disk unit is a Flash memory device 131: Other semiconductor memories that are non- volatile memory, such as MRAM made be used. Another possible storage media storing data in the disk unit is the HDD 132. The HDD may include initializing functions. Within the HDD 132, shingled write technology can permit mass writing by using heads with the width of a plurality of tracks. Such technology can be integrated with the initializing function.

Other possible elements of the storage system include the RAID Group 133 for involving a plurality of disks 131,132 to improve availability or performance. The Storage area network(SAN) 160 can connect and facilitate interactions between the storage system 110 (via the storage area network interface 121), host computer 140 and management computer 150. Similarly, the Local area network(LAN) 170 connects and facilitates interactions between the storage system 110 (via the Local area network interface 124), host computer 140, and management computer 150. The Host computer 140 may send I/O commands to storage system via SAN 160 as well as sending and receiving data from storage system 110 via SAN 160. The host may also send instructions to the storage system 110 via LAN 170 or SAN 160. A management computer 150 may provide information about the storage system 110, as well as sending instructions to the storage system 110 via LAN 170 or SAN 160.

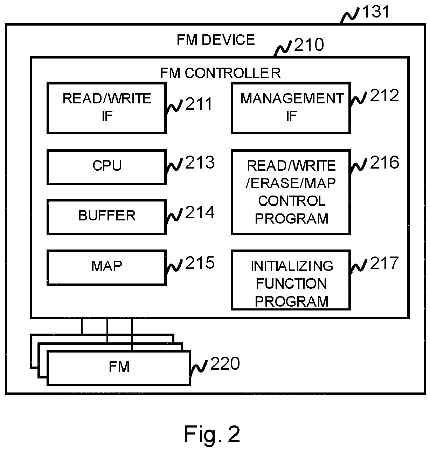

Figure 2 illustrates an exemplary flash memory device configuration 131 according to embodiments of the invention. The Flash memory device may include an interface that could receive same commands (Fibre Channel) as the HDDs. While the flash memory device 131 is compatible with HDDs considering the size and functions, there may be applications where there is a centralized FM controller with FM chips on a mother board. Various possible components of a flash memory device, according to embodiments of the invention, are indicated as follows. The flash memory controller 210 contains various components to handle the functionality of the flash memory device. A Read/write interface 211 and a Management interface 212 interacts with the storage controller 102. The read/write interface 211 facilitates read/write I/O commands and/or to receive instructions to conduct read/write operations. The management interface 212 interacts with storage controller 120 to facilitate initializing commands and/or to receive instructions to conduct initializing operations. The management interface may also be combined with Read/write interface 211. The CPU 213 handles the operations for the FM device 210. A Buffer 214 may also be provided for temporarily storing read and write data from the FM 220 as needed.. Additionally, a map 215 may be provided for showing a map between the logical address (disk I/O) to physical page address on FM 220 and can be modified during a write/wear-leveling process. The control program 216 executes according to read/write/erase/map commands. In a writing process, data is written to another page and the map is modified accordingly. The control program also runs periodically to erase/wear-level. In erasing/wear-leveling, efficient pages in a block are migrated to new blocks and old blocks are erased. The initializing program 217 erases all blocks on FM 220, and executes according to the initializing commands. However, depending on the type/model of the flash memory device 131, there may not be an initializing function or program available. The flash memory chip 220 stores data by utilizing a plurality of blocks. Each block contains a plurality of memory pages.

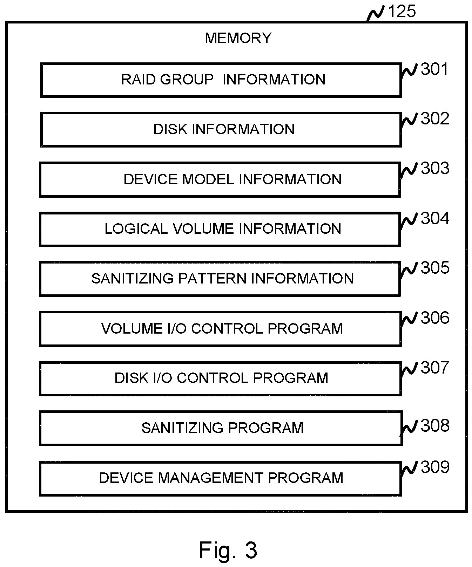

Figure 3 illustrates an exemplary memory structure 125 according to embodiments of the invention. Various possible components of the memory are indicated as follows. The memory structure may contain the RAID group information table 301, which indicates information of the physical structure management for disks 131,132 and their respective RAID group. A Disk information table 302 may be provided to contain information for disk configuration management. Additionally, a device model information table 303 provides a database of device information for the storage media of the storage system. Other tables may also include a Logical volume information table 304 to provide reference management information of logical volumes and a sanitizing pattern information table 305 to provide possible overwriting data patterns to use during the sanitizing process.

Several programs may also be included in the memory structure 125. Such programs can include a Volume I/O control program 306 which executes and manages read/write commands for the storage system and facilitates the transfer of data between the cache 126 and the SAN interface 121. A Disk I/O control program 307 can be used to facilitate the transfer of data between the cache 126 and the disk interface 123. A sanitizing program 308 may also be utilized to execute the sanitization process according to sanitization commands. For a FM device 131, a FM device management program 309 executes a sanitizing process to send the initializing command. This may be conducted by converting a command to sanitize into a command to invoke an initialization function of the FM device.

Table Structures

Exemplary table structures utilized in embodiments of the invention are described below.

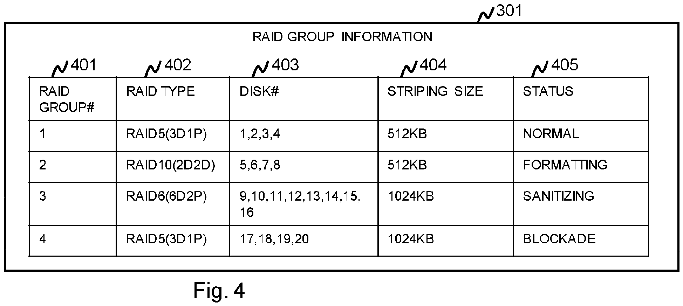

Figure 4 illustrates an exemplary structure of a RAID group information table 301 according to embodiments of the invention. Various possible elements of the RAID group information table, according to embodiments of the invention, are described as follows. The RAID group information table 301 may include an entry for the RAID group number 401 to indicate the ID of the RAID groups 133 in the storage system. An entry for the RAID type 402 indicates the RAID level, ratio of data and parity of a particular RAID group. Additional entries may include the Disk number 403 indicates an ID of the disks 131, 132 that are part of the RAID group 133 and the striping size 404 for indicating the striping data size. A status indicator 405 provides the status of the RAID group 133. "Normal" indicates that the RAID group is functionally normally. "Formatting" and "Sanitizing" indicates that the RAID group is undergoing a formatting or sanitizing process respectively. "Blockade" indicates that the RAID group may be inaccessible due to migration or error or other issues.

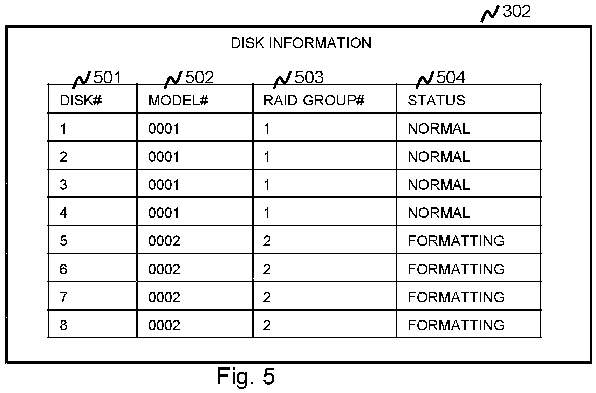

Figure 5 illustrates an exemplary disk information table 302 according to embodiments of the invention. Various possible elements of the disk information table, according to embodiments of the invention, are described as follows. For example, the Disk number 501 may be provided for indicating an ID of the disk 131,132. Similarly, the model can also indicate the ID of the disk model. The RAID group number 503 indicates the ID of the RAID group 133 that the disk belongs to. The status indicates the status of the disk 131,132. "Normal" indicates the disk is normally accessible. "Formatting" and "Sanitizing" indicates that the disk is undergoing a Formatting or Sanitizing process, respectively. "Blockade" indicates that the disk may be inaccessible due to migration or errors or other issues.

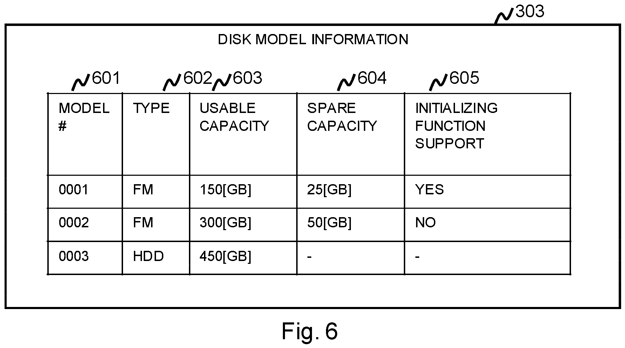

Figure 6 illustrates an exemplary device model information table 306 according to embodiments of the invention. Various possible elements of the disk model information table, according to embodiments of the invention, are indicated as follows. The Model number 601 may be included for indicating the ID of the device model of the storage media. The Type 602 may also be included in the information table for indicating the type of the storage media and the usable capacity 603 can also be provided to indicate the usable capacity of a storage media that contains addresses for access. The spare capacity 604 indicates the capacity used internally by the storage media. Disks 131,132 may contain a spare capacity for write and erase/ wear-leveling processes. The spare capacity can be set, if known, or the user can set it as needed. An entry for the initializing function support 605 provides an indicator as to whether the storage media supports the initializing function 217. The Initializing function may include BLOCK ERASE EXT command, OVERWRITE EXT command, and CRYPTO SCRAMBLE command, which are ATA/ATAPI command set (ATA8-ACS) storage media may support. BLOCK ERASE EXT command causes Block Erase operations on all user data. OVERWRITE EXT command fills the user data area with a four byte pattern passed in the LBA field of the command. Parameters when receiving this command include a count for multiple overwrites and the option to invert the four byte pattern between consecutive overwrite passes. CRYPTO SCRAMBLE command changes the internal encryption keys that are used for user data, which prohibits the data stored with the internal encryption keys to be decrypted. The initial data pattern 606 is the data pattern used when the initializing function is invoked, which may be fixed or any pattern, or even user defined depending on the situation. The storage controller may additionally store the information of the initializing function support 605 based on information obtained by sending an inquiry command to the storage media, such as an IDENTIFY DEVICE command. The inquiry command may be send when the storage media is initially recognized by the storage controller or when the storage media is for the first time subject to a sanitizing command from the management or host computer.

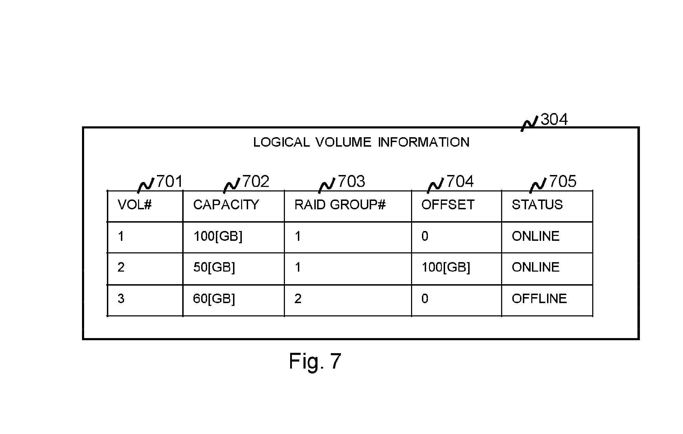

Figure 7 illustrates an exemplary logical volume information table 304 according to embodiments of the invention. The storage controller 120 provides the storage devices in the disk units as logical volumes to the host. Various possible elements of the logical volume information table, according to embodiments of the invention, are indicated as follows. The exemplary logical volume information table may include a volume number 701 for indicating the ID of the logical volume. A capacity 702 entry is also included for indicating the capacity of the logical volume. The RAID group number 703 indicates the ID of the RAID group that the logical volume data is stored in. An Offset 704 indicates the starting address inside RAID group. A status indicator 705 indicates the status of the logical volume, which may include Normal/Blockade/Formatting as described above. This status is necessary to determine if the RAID group subject to the sanitization command is not subject to I/O operation or migrations. While the sanitization command may be conducted on a physical basis (RAID group), the I/O operations and data processing would likely to be performed on a logical basis (logical volume), thus referral would be necessary.

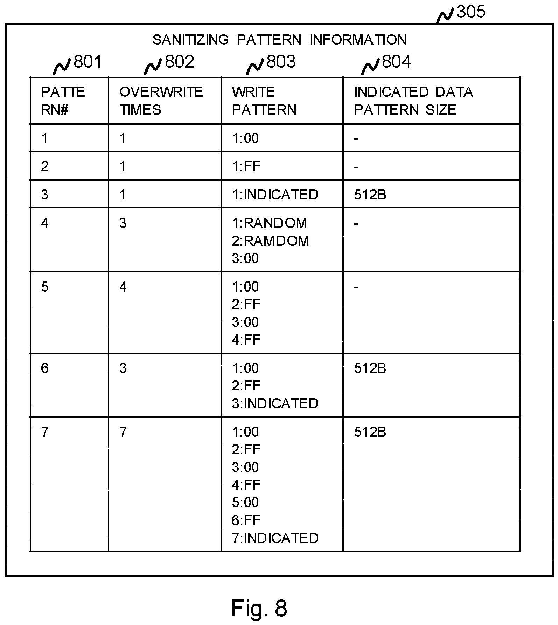

Figure 8 illustrates an exemplary sanitizing pattern information table 305 according to embodiments of the invention. The sanitizing pattern information table 305 may include several elements. For example, the sanitizing pattern information table 305 may include a pattern number 801 for indicating the ID of the sanitizing pattern. An indication for the number of overwrite times 802 needed to sanitize a disk may also be included, as there may be one or more times needed to conduct sanitization. The write pattern 803 indicates the overwriting data pattern used to sanitize a disk. If the disk is to be overwritten several times, then an order write patterns may be used. The size of the overwriting data pattern may be indicated by an indicated data pattern size 804, to indicate the size of the overwriting data pattern that will be indicated by a sanitizing command. Other elements may also be included into the sanitizing pattern information table to assist in the sanitizing process.

Exemplary Flowchart

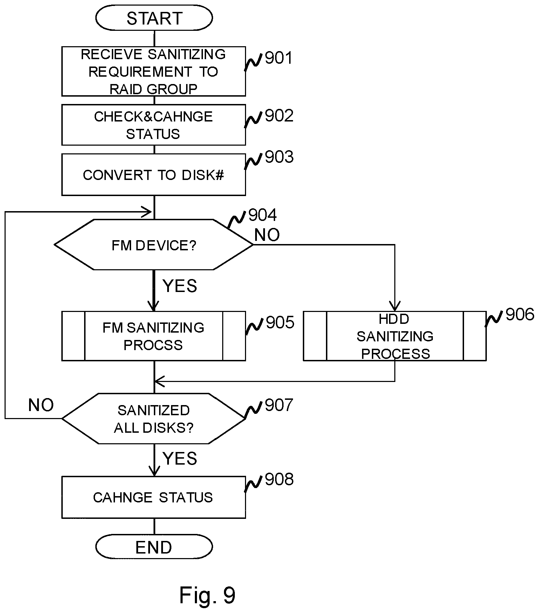

Figure 9 illustrates an exemplary flowchart of a sanitizing process according to embodiments of the invention. The process for the sanitizing begins at step 901: In step 901 the storage system 110 receives a sanitizing command from management computer 150 via LAN 170. Such commands may be created from host computer 140 and received via SAN 160. Although, sanitizing command may be targeted to the whole storage system (all the storage device in the disk unit 130), or to one specific storage device, in this example it is conducted against the a RAID group. Such commands may include a RAID group# 401 and a sanitizing pattern# 801. If the command is targeted to the whole storage system, the command would be performed by each RAID group. The command can be listed. If the sanitizing pattern has an indicated pattern, the command may also include an indicated data pattern. The storage system stores the indicated data pattern in memory. In step 902, the storage system 110 checks the statuses of RAID group 405, Disk 504 and logical volumes 705, to determine whether sanitizing can be allowed by referring to the status 705 on the logical volume information 304. If sanitizing is allowed, the storage system changes the status of the RAID group 405 to "SANITIZING". If there are some logical volumes that cannot accept sanitizing (for example, online logical volumes) in that RAID group, the storage system may sanitize after migrating the data of logical volumes to other RAID groups. Or the storage controller 120 may just return an error indication. In step 903, the storage system converts the RAID group# to disk# by using the RAID group information table 301. In step 904, the storage system determines the disk type 602 by using disk information table 303. If the disk type is FM device 131, proceed to stop 905 to perform a sanitizing process for the FM device. If the disk type is HDD 132, the process proceeds to step 906 for performing a sanitizing process for HDD. In step 907, the storage system checks if all of the disk units in the RAID group are processed, and if they are not, then the process proceeds to step 904. The processes of each disk may also be done in parallel. In step 908, the storage system changes the status of the RAID group 405 to "NORMAL".

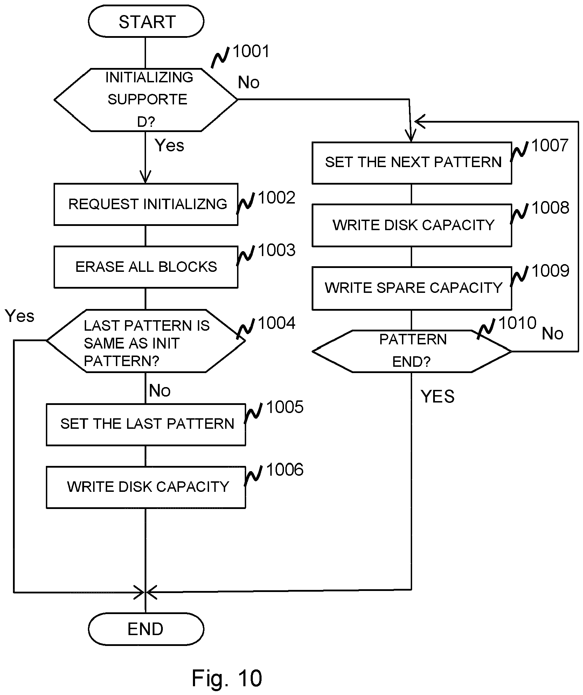

Figure 10 illustrates an exemplary flowchart of a sanitizing process 905 for a flash memory (FM) device according to embodiments of the invention. The process begins at step 1001, where the storage system 110 determines whether the FM device 131 supports the initializing function 217 by using the disk model information table 303. If there is no information stored for the initializing function support 605, the storage controller may send an inquiry command to the FM device 131 to determine whether or not the storage media supports the initializing function and store the information in the disk model information table 303. If the sanitization command is not issued so frequently, for example, when it is only issued when the storage media is removed from the storage system, the storage system may not necessarily maintain information of the initializing function, but rather submit an inquiry to the target storage media each time the storage controller receives a sanitizing command from the management or host computer. In step 1002, if the FM device supports the initializing function 217, the storage controller commands the FM device 131 to initialize. In step 1003, the FM device 131 erases all blocks after receiving the initializing command. All areas, including spare capacity, are erased by the initializing function. The storage system 110 may send a SANITIZE STATUS EXT command against the FM device 131 if a predetermined time passes from sending the initialize command to the FM device 131. The SANITIZE STATUS EXT command would allow the storage controller to check if the initializing command was completed or not. For example if the physical sectors were not successfully sanitized, an error output would be send from the FM device 131. In step 1004, the storage system determines whether the last pattern of sanitizing is the same as the initialize data pattern. If the last pattern is the same, then the process ends. However, if the last pattern is not the same, then the process proceeds to step 1005 where the storage controller sets the last data pattern. In step 1006, the storage controller writes to all areas of FM device according to a data pattern. However, steps 1004-1006 may be skipped if needed. For example, if the user just wants to sanitize and doesn't care about the last pattern, the steps may be skipped. If the FM device doesn't support the initializing function, the process proceeds to step 1007, where the storage controller sets the first write pattern. In step 1008, the storage controller writes set data to all areas (head to end address) of the FM device 131. In step 1009, the storage controller writes to the head to spare capacity (head to spare capacity address) of FM device 131. This process prevents data from remaining in the spare area. In step 1010, the storage controller determines whether the overwriting pattern has ended or not. If the overwriting pattern has not yet ended, storage controller returns to step 1007 and sets the next write pattern. If the pattern has ended, then the process ends.

Thus, despite the command by the management computer or host computer including the shredding pattern, the storage controller 120 would convert the shredding command to a initializing command. This would allow the sanitization process time to be shorter than actually writing the pattern.

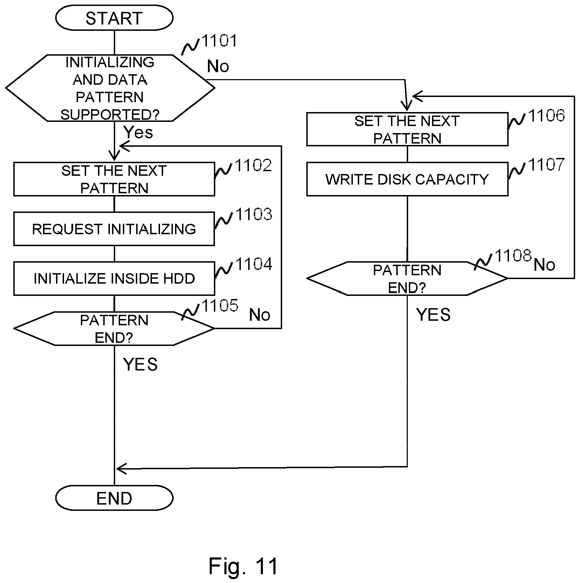

Figure 11 illustrates an exemplary flowchart of a sanitizing process 906 for a Hard Disk Drive (HDD) according to embodiments of the invention. The process starts at step 1101, where the storage system 110 determines whether the HDD 132 supports the initializing function 1517 and sets the initial data pattern 606 by using the disk model information table 303. If there is no information stored for the initializing function support 605, the storage controller may send an inquiry command to the HDD 132 to determine whether or not the HDD supports the initializing function and store the information in the disk model information table 303. In case where the sanitization command is not issued so frequently, such as only when the storage media is removed from the storage system, the storage system may not maintain information of the initializing function, but rather inquiry to the target storage media every time the storage controller receives a sanitizing command from the management or host computer. If the HDD supports the initializing function 1517 and supports setting the initial data pattern, the process proceeds to step 1102, where the storage controller sets the first data pattern. In step 1103, the storage controller commands the HDD 132 to initialize by invoking its initializing function by a command. In step 1104, the HDD 132 writes all blocks after receiving instructions to initialize by using its writing function. In step 1105, the storage controller determines whether the overwriting pattern has ended. If the pattern has not ended yet, the storage controller returns to step 1102 and sets the next write pattern. If the pattern has ended, the process ends. If the HDD device does not support the initializing function 1517 and/or setting the initial data pattern, the process proceeds to step 1106 where the storage controller sets the first write pattern. In step 1107, the storage controller writes set data to all areas (head to end address) of the HDD 133, which may be overwritten many times. In step 1108, the storage controller determines whether the overwriting pattern has ended. If the pattern has not ended yet, storage controller returns to Step 1106 and sets the next write pattern. If the pattern ends, then the process ends.

Second Embodiment: Formatting the RAID Group

In this embodiment, the system configuration is the same as the first embodiment. However, unlike the sanitization processes, formatting does not require multiple overwrites, and the storage areas may only be overwritten once.

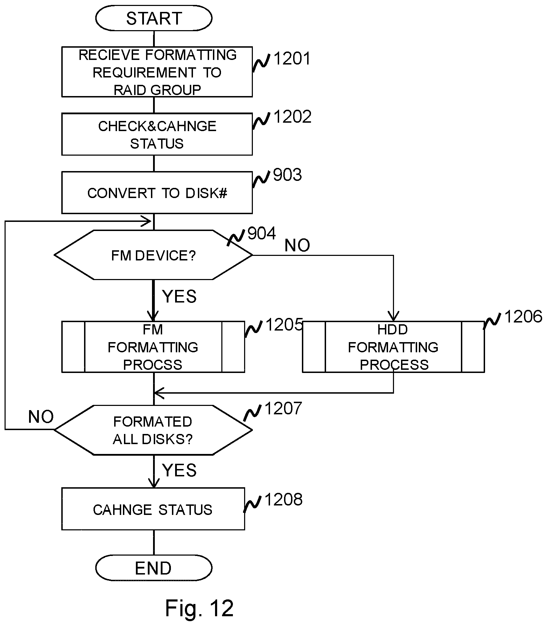

Figure 12 illustrates an exemplary flowchart of a formatting process according to embodiments of the invention. The process begins at step 1201, where the storage system receives formatting command from the management computer via LAN. The Command includes a RAID group#. In step 1202, the storage system 110 checks the statuses of RAID group 405, Disk 504 and logical volumes 705, if formatting is allowable. If formatting is allowable, then the storage system changes the status of the RAID group 405 to "FORMATTING". The process then proceeds similarly to Figure 9, however, if the disk is determined to be a FM device, then the process proceeds to step 1205 where the storage system performs a formatting process for FM device. However, if the disk is determined to be a HDD, then the process proceeds to step 1206, where the storage system performs a formatting process for HDD. In step 1207. the storage system loops until all disks in the RAID group are processed. After the all disks are formatted, the process proceeds to step 1208, where the storage system changes the status of the RAID group 405 to "NORMAL".

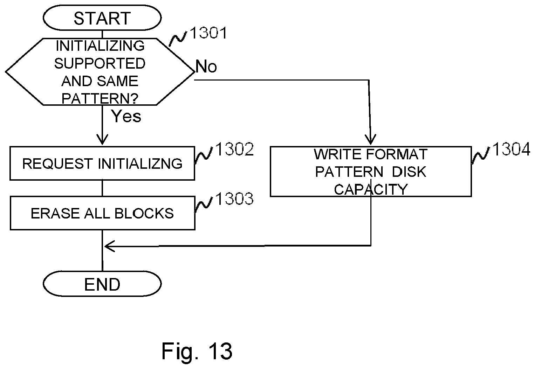

Figure 13 illustrates an exemplary flowchart of a formatting process for a FM device 1205 according to embodiments of the invention. The process begins in step 1301, where the storage system determines whether the FM device supports the initializing function by using a disk model information table 303. Storage system also determines whether the initializing data pattern is the same as a format pattern or not. If there is no information stored for the initializing function support 605, the storage controller may send an inquiry command to the FM device 131 to determine whether or not the storage media supports the initializing function and store the information in the disk model information table 303. In the case where the sanitization command is not issued so frequently, such as only when the storage media is removed from the storage system, the storage system may not maintain information of the initializing function, but rather inquiry to the target storage media every time the storage controller receives a sanitizing command from the management or host computer. If the FM device supports the initializing function, the process proceeds to step 1302, where the storage controller sends a command to the FM device to invoke the initializing function. In step 1303, the FM device erases all blocks after receiving initializing. The storage system 110 may send a SANITIZE STATUS EXT command against the FM device if a predetermined time passes from sending the initialize command to the FM device. The SANITIZE STATUS EXT command would allow the storage controller to check if the initializing command was completed or not. For example if the physical sectors were not successfully sanitized, an error output would be send from the FM device. However, if the FM device does not support the initializing function, the process proceeds to step 1304, where the storage controller writes a format data pattern to all capacity areas (head to end address) of the FM device. Unlike the sanitizing process, it may not be necessary to overwrite the spare capacity areas.

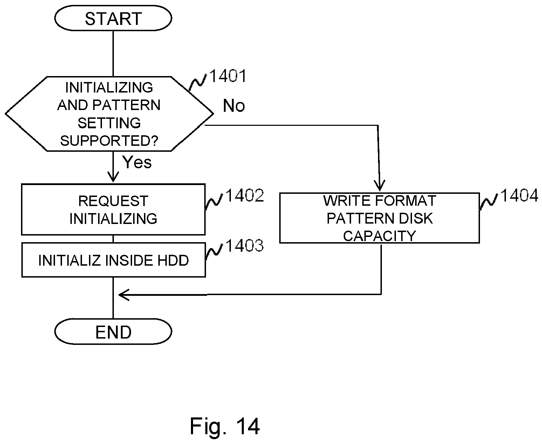

Figure 14 illustrates an exemplary flowchart of a formatting process for a HDD 1206 according to embodiments of the invention. The process begins at step 1401, where the storage system determines whether the HDD supports the initializing function and pattern setting by using the disk model information table. If there is no information stored for the initializing function support 605, the storage controller may send an inquiry command to the HDD to determine whether or not the storage media supports the initializing function and store the information in the disk model information table 303. In case where the sanitization command is not issued so frequently, such as only when the storage media is removed from the storage system, the storage system may not maintain information of the initializing function, but rather inquiry to the target storage media every time the storage controller receives a sanitizing command from the management or host computer. If the HDD supports the initializing function and data pattern setting, the process proceeds to step 1402, where the storage controller sets the format pattern and commands the HDD to invoke its initializing function. In step 1403, the HDD 132 writes to all blocks after receiving an initializing command by using its writing function. If the HDD does not support the initializing function, then the process proceeds to step 1404, where the storage controller writes a format data pattern to all capacity areas of the HDD.

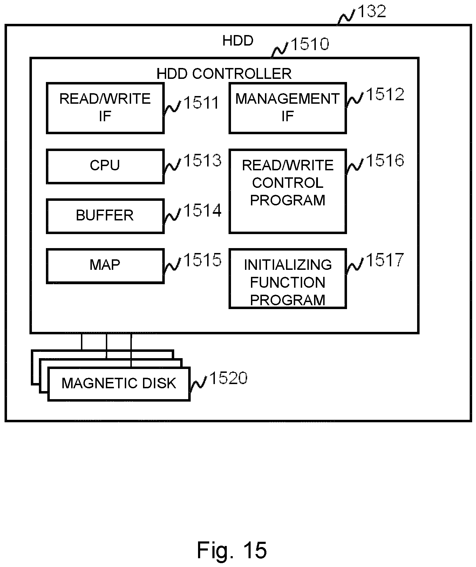

Figure 15 illustrates an exemplary HDD configuration 132 according to embodiments of the invention. Various components of the HDD are described herein. The HDD controller 1510 contains various components to handle the functionality of the hard disk device. The Read/write interface 1511 and the Management interface 1512 are connected to the storage controller 120. The Read/Write interface 1511 facilitates read/write I/O commands, and the Management interface 1512 facilitates initializing commands. Alternatively, the Management interface 1512 may be combined with Read/write interface 1511. The CPU 1513 handles the functionality for the HDD 132. A Buffer 1514 may also be provided for temporarily storing read data from Magnetic disk 1520 and write data to Magnetic disk 1520, which handles more permanent storage of the data. The Map 1515 indicates a map between the logical address (disk I/O) to the corresponding physical page address on Magnetic disk 1520. The map may be modified during the upwrite process. However, depending on the HDD model, the Map may be absent from the HDD. A Read/write control program 1516 may execute a read/write command. For mass writing, an initializing function program 1517 is provided for enabling writes to a plurality of blocks/tracks on Magnetic disk 1520. The initializing function program 1517 executes according to a write/mass write command. However, depending on the HDD model, the initializing function program 1517 may be absent..

Moreover, other implementations of the invention will be apparent to those skilled in the art from consideration of the specification and practice of the invention disclosed herein. Various aspects and/or components of the described embodiments may be used singly or in any combination in the shredding of data in a storage system by formatting or by sanitization. It is intended that the specification and examples be considered as exemplary only, with a true scope and spirit of the invention being indicated by the following claims.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A storage system, comprising:
a plurality of storage devices (131, 132); and
a storage controller (120) for receiving commands from a host computer (140) coupled to the storage system and for controlling the plurality of storage devices (131, 132);
wherein in response to receiving a command to sanitize, the storage controller (120) determines whether any ones of the plurality of storage devices (131, 132) that are subject to the command contain an initializing function, and invokes the initializing function of the any ones of the plurality of storage devices (131, 132) having the initializing function.

2. The storage system of claim 1,
wherein the plurality of storage devices (131, 132) are grouped into a plurality of RAID groups,
wherein if the command to sanitize is against at least one of the RAID groups, the storage controller (120) determines for each of the at least one of the RAID groups subject to the command whether the storage device of the at least one of the RAID groups has the initializing function in determining whether any of the plurality of storage devices subject to the command has a initializing function.

3. The storage system of claim 1 or 2,
wherein the plurality of storage devices comprises hard disk drives (132) and flash memory devices (131);
wherein the storage controller (120) identifies a type of storage media for each of the storage devices in response to receiving the command to sanitize, and
wherein if the type is identified as a hard disk drive (HDD) and if the HDD does not have an initializing function, the storage controller (120) sanitizes the HDD by using a write pattern.

4. The storage system of at least of one of claims 1 to 3, wherein if the command to sanitize is a hard disk drive (HDD) shredding command with a write pattern, the storage controller (120) converts the command to invoke the initializing function if the any ones of the plurality of storage devices subject to the command has the initializing function.

5. The storage system of claim 4,
wherein the any ones of the plurality of storage devices (131, 132) subject to the command comprises at least one flash memory device (131), and
wherein the storage controller (120) determines if a last pattern is equivalent to an initialize data pattern of the initialization function, and if the last pattern is not equivalent to the initialize data pattern, uses the write pattern to write set data to the at least one flash memory device (131).

6. The storage system of at least one of claims 2 to 5,
wherein the storage controller (120) provides the plurality of storage devices (131, 132) to the host computer (140) as a plurality of logical volumes, and checks whether there is an online logical volume included in the each of the at least one of the RAID groups subject to the command to sanitize;
wherein if the online logical volume exists, the storage controller (120) migrates the online logical volume.

7. The storage system of at least one of claims 3 to 6, wherein if the any ones of the plurality of storage devices (131, 132) subject to the command to sanitize is a HDD containing the initializing function, the storage controller (120) determines whether a last pattern is equivalent to an initialize data pattern of the initialization function, and if the last pattern is not equivalent to the initialize data pattern, uses the write pattern to write set data to the hard disk drive (132).

8. The storage system of at least one of claims 1 to 7,
wherein the plurality of storage devices (131, 132) are grouped into RAID groups, each of the RAID groups comprising at least one of the plurality of storage devices (131, 132);
wherein the command to sanitize is against all of the plurality of storage devices (131, 132); and
wherein the storage controller (120) determines for each of the RAID groups whether the at least one of the plurality of storage devices (131, 132) in the each of the RAID groups contains the initializing function or not, and performs the sanitization by RAID groups.

9. A storage controller for a storage system with a plurality of storage devices (131, 132), the storage controller (120) being configured for receiving commands from a host computer (140) coupled to the storage system and for controlling the plurality of storage devices (131, 132), the storage system executing a process comprising:
in response to receiving a command to sanitize, determining whether any ones of the plurality of storage devices (131, 132) that are subject to the command contain an initializing function, and
invoking the initializing function of the any ones of the plurality of storage devices (131, 132) having the initializing function.

10. The storage controller of claim 9,
wherein the plurality of storage devices (131, 132) are grouped into a plurality of RAID groups,
wherein if the command to sanitize is against at least one of the RAID groups, the determining whether any of the plurality of storage devices (131, 132) subject to the command has a initializing function further comprises determining for each of the at least one of the RAID groups subject to the command whether the storage device of the at least one of the RAID groups has the initializing function.

11. The storage controller of claim 9 or 10, wherein the process further comprises identifying a type of storage media for each of the storage devices (131, 132) in response to receiving the command to sanitize,
wherein if the type is identified as a hard disk drive (HDD) and if the HDD does not have an initializing function, sanitizing the HDD by using a write pattern;
wherein the plurality of storage devices comprises hard disk drives (132) and flash memory devices (131).

12. The storage controller of at least one of claims 9 to 11, wherein if the command to sanitize is a hard disk drive (HDD) shredding command with a write pattern, the process further comprises converting the command to invoke the initializing function if the any ones of the plurality of storage devices (131, 132) subject to the command has the initializing function.

13. The storage controller of claim 12, wherein the any ones of the plurality of storage devices subject to the command comprises at least one flash memory device (131),
wherein the process further comprises determining if a last pattern is equivalent to an initialize data pattern of the initialization function, and if the last pattern is not equivalent to the initialize data pattern, using the write pattern to write set data to the at least one flash memory device (131).

14. The storage controller of at least one of claims 10 to 13,
wherein the storage controller (120) provides the plurality of storage devices (131, 132) to the host computer (140) as a plurality of logical volumes, and checks whether there is an online logical volume included in the each of the at least one of the RAID groups subject to the command to sanitize;
wherein if the online logical volume exists, the storage controller (120) migrates the online logical volume.

15. The storage controller of at least one of claims 11 to 14, wherein if the any ones of the plurality of storage devices (131, 132) subject to the command to sanitize is a HDD containing the initializing function, the storage controller (120) determines whether a last pattern is equivalent to an initialize data pattern of the initialization function, and if the last pattern is not equivalent to the initialize data pattern, uses the write pattern to write set data to the hard disk drive (132).
